# EUROPÄISCHE PATENTSCHRIFT

(11) **EP 4 584 045 B1**
(45) Veröffentlichungstag und Bekanntmachung des Hinweises auf die Patenterteilung: **30.09.2026**
(21) Anmeldenummer: 23762386.3
(22) Anmeldetag: 25.08.2023
(51) Int. Cl.: B23K 26/0622, B23K 26/06, B23K 26/082, B23K 26/21, B23K 26/362, B23K 26/38

(54) **VORRICHTUNG UND VERFAHREN ZUM BEARBEITEN EINES MATERIALS MITTELS RÄUMLICH STATISTISCH UM EINEN RÄUMLICHEN SOLLWERT EINGEBRACHTEN LASERPULSEN**
DEVICE AND METHOD FOR PROCESSING A MATERIAL BY MEANS OF LASER PULSES THAT ARE INTRODUCED SPATIALLY STATISTICALLY AROUND A SPATIAL TARGET VALUE
DISPOSITIF ET PROCÉDÉ DE TRAITEMENT D'UN MATÉRIAU AU MOYEN D'IMPULSIONS LASER QUI SONT INTRODUITES STATISTIQUEMENT ET SPATIALEMENT AUTOUR D'UNE VALEUR CIBLE SPATIALE

(30) Priorität: 09.09.2022 DE 102022122964
(43) Veröffentlichungstag der Anmeldung: 16.07.2025
(73) Patentinhaber: TRUMPF Laser GmbH, 78713 Schramberg (DE)
(72) Erfinder: GROSSMANN, Daniel, 78713 Schramberg (DE); KLEINER, Jonas, 71229 Leonberg (DE); SAILER, Marc, 78052 Villingen (DE)
(74) Vertreter: Trumpf Patentabteilung
(86) Internationale Anmeldenummer: PCT/EP2023/073377
(87) Internationale Veröffentlichungsnummer: WO 2024/052137

(56) Entgegenhaltungen:
- DE-A1- 102007 025 943
- US-A1- 2014 217 058
- US-A1- 2020 399 175

## Beschreibung

### Technisches Gebiet

Die vorliegende Erfindung betrifft eine Vorrichtung und ein Verfahren zum Bearbeiten eines Materials mittels Laserpulsen eines gepulsten Lasers entsprechend dem Oberbegriff der Ansprüche 1 und 9 (siehe z.B DE 10 2007 025943 A1).

### Stand der Technik

Bei der Bearbeitung eines Materials mit einem gepulsten Laser entstehen häufig regelmäßige Strukturen, beispielsweise durch eine Schwebung zwischen der Repetitionsrate und weiteren Prozessparametern wie der Vorschubgeschwindigkeit und der Anzahl der Wiederholungen an Materialüberfahrten. Solche regelmäßigen Strukturen können beispielsweise zu Interferenzeffekten führen, die den optischen Eindruck des bearbeiteten Materials stören.

Aus der EP 3 613 228 A1 ist ein Verfahren und eine Einrichtung zum Laserschneiden, insbesondere zum Laserschneiden von Stents, bekannt.

Aus der DE 10 2017 006 358 A1 ist ein Verfahren zur Strukturierung einer Substratoberfläche bekannt.

Aus der US 2018/0207748 A1 ist ein Bearbeitungsprozess mit einer Zufallstriggerfunktion für einen Ultrakurzpulslaser bekannt.

### Darstellung der Erfindung

Ausgehend von dem bekannten Stand der Technik ist es eine Aufgabe der vorliegenden Erfindung, ein verbessertes Verfahren zum Bearbeiten eines Materials, sowie eine entsprechende Vorrichtung bereitzustellen.

Die Aufgabe wird durch ein Verfahren zum Bearbeiten eines Materials mit den Merkmalen des Anspruchs 1 gelöst. Vorteilhafte Weiterbildungen ergeben sich aus den Unteransprüchen.

Entsprechend wird ein Verfahren zum Bearbeiten eines Materials mittels Laserpulsen eines gepulsten Lasers vorgeschlagen, wobei zur Bearbeitung des Materials die Laserpulse in das Material eingebracht werden. Erfindungsgemäß werden die Laserpulse räumlich statistisch um einen räumlichen Sollwert verteilt in das Material eingebracht.

Das zu bearbeitende Material kann hierbei ein Material wie beispielsweise eine Metallfolie, ein Polymer oder ein Kunststoff sein. Das zu bearbeitende Material kann auch ein Halbleiter sein, beispielsweise ein elementarer Halbleiter wie Silizium oder Germanium, oder ein III-V-Halbleiter wie Galliumarsenid, oder ein organischer Halbleiter oder jede andere Art von Halbleiter sein. Beispielsweise kann das Material ein Silizium-Wafer sein. Insbesondere kann das Material ein Schichtsystem sein, wobei jede Schicht gewählt werden kann aus der Gruppe der Metalle, Polymere, Kunststoffe oder Halbleiter. Insbesondere kann das Material auch ein Glas sein, beispielsweise Saphir sein.

Der Laser stellt hierbei die Laserpulse des Laserstrahls zur Verfügung, wobei die einzelnen Laserpulse den Laserstrahl in der Strahlausbreitungsrichtung ausbilden. Insbesondere kann der Laser ein Ultrakurzpulslaser sein, wobei die Pulslänge der einzelnen Laserpulse vorzugsweise kürzer als 10ns ist, bevorzugt kürzer als 500ps ist.

Anstatt einzelner Laserpulse kann der Laser auch Laserbursts zur Verfügung stellen, wobei jeder Burst das Aussenden mehrerer Laserpulse umfasst. Dabei kann für ein bestimmtes Zeitintervall das Aussenden der Laserpulse sehr dicht, im Abstand weniger Piko- bis Nanosekunden, aufeinander folgen. Bei den Laserbursts kann es sich insbesondere um GHz-Bursts handeln, bei denen die Abfolge der aufeinanderfolgenden Laserpulse des jeweiligen Bursts im GHz Bereich stattfindet.

Die Laserpulse werden in das Material eingebracht, wodurch das Material bearbeitet werden kann. Einbringen kann hierbei bedeuten, dass die Energie des Laserstrahls in dem Material mindestens teilweise absorbiert wird. Der Fokus des Laserstrahls kann dabei in Strahlausbreitungsrichtung über der Oberfläche des zu bearbeitenden Materials liegen oder unter der Oberfläche im Volumen des zu bearbeitenden Materials liegen. Die Fokusposition kann auch genau auf der Oberfläche des zu bearbeitenden Materials liegen.

Insbesondere kann der Begriff "Fokus" im Allgemeinen als eine gezielte Intensitätsüberhöhung verstanden werden, wobei die Laserenergie in einen "Fokusbereich" konvergiert. Insbesondere wird daher im Folgenden der Ausdruck "Fokus" unabhängig von der tatsächlich verwendeten Strahlform und den Methoden zur Herbeiführung einer Intensitätsüberhöhung verwendet. Durch eine "Fokussierung" kann auch der Ort der Intensitätserhöhung entlang der Strahlausbreitungsrichtung beeinflusst werden. Beispielsweise kann die Intensitätsüberhöhung quasi punktförmig sein und der Fokusbereich einen Gauß-förmigen Intensitätsquerschnitt aufweisen, wie er von einem Gauß'schen Laserstrahl zur Verfügung gestellt wird.

Die Intensitätsüberhöhung kann auch linienförmig ausgebildet sein, wobei sich um die Fokusposition ein Besselförmiger Fokusbereich ergibt, wie er von einem nicht-beugenden Strahl zur Verfügung gestellt werden kann. Des Weiteren sind auch andere komplexere Strahlformen möglich, deren Fokusposition sich in drei Dimensionen erstreckt, wie beispielsweise ein Multi-Spot-Profil aus Gauß'schen Laserstrahlen und/oder nicht Gauß'schen Intensitätsverteilungen.

Durch die absorbierte Energie des Laserstrahls erwärmt sich das Material entsprechend der Intensitätsverteilung des Lasers und/oder geht wegen der elektromagnetischen Wechselwirkung des Lasers mit dem Material in einen temporären Plasmazustand über. Insbesondere können also neben linearen Absorptionsprozessen auch nicht-lineare Absorptionsprozesse verwendet werden, die durch die Nutzung hoher Laserenergien beziehungsweise Laserintensitäten zugänglich werden. Das Material wird dementsprechend besonders im Fokus des Lasers modifiziert, da dort die Intensität des Laserstrahls am größten ist. Insbesondere kann dadurch erreicht werden, dass ein Teil des Materials aus dem Verbund des Materials herausgelöst werden kann, beispielsweise schmilzt oder verdampft wird. Damit sind bezüglich der Wechselwirkung zwischen dem Laserlicht und dem zu bearbeitenden Material an sich bekannte Bearbeitungsprozesse möglich, die beispielsweise als Laserbohren, Perkussionsbohren oder Laserablation bekannt sind.

Durch die Wechselwirkung der Laserpulse mit dem zu bearbeitenden Material können in das Material auch Materialmodifikationen ein- oder aufgebracht werden.

Eine Materialmodifikation kann beispielsweise eine permanente Modifikation der Netzwerkstruktur des Materials oder der (lokalen) Dichte des Materials sein, die ursächlich von der durch die direkte Lasereinstrahlung erzeugten lokalen Erwärmung und der nachfolgenden Abkühlung und/oder elektronischen Relaxationsprozessen stammt.

Die Materialmodifikation in oder auf dem Material kann hierbei beispielsweise eine Modifikation der Struktur, insbesondere der kristallinen Struktur und/oder der amorphen Struktur und/oder der chemischen Struktur und/oder der mechanischen Struktur, des Materials sein.

Die Materialmodifikation ist in dem Material, wenn sie im Wesentlichen in das Volumen des Materials eingebracht wird. Die Materialmodifikation ist hingegen auf dem Material, wenn die Materialmodifikation im Wesentlichen die Oberfläche des Materials modifiziert. Insbesondere kann eine Materialmodifikation aber sowohl in als auch auf das Material ein- oder aufgebracht werden, in Abhängigkeit von der Fokusposition und dem Strahlprofil des Laserstrahls.

Eine Materialmodifikation kann auch die direkte Veränderung einer physikalischen Eigenschaft, beispielsweise der Festigkeit und/oder der Biegefestigkeit und/oder die Toleranz des Materials gegenüber Biegekräften und Scherkräften sowie Schub und Zugspannungen, sein. Eine Materialmodifikation kann insbesondere auch eine lokale Dichteänderung sein, die abhängig vom gewählten Material sein kann. Beispielsweise können durch Dichtevariationen im Material Spannungs- und Kompressionszonen entstehen, die eine höhere Materialhärte aufweisen als das unbehandelte Material. Es ist auch möglich, dass eine Materialmodifikation die optischen Eigenschaften des Materials bestimmen, beispielsweise indem sie durch ein transparentes Material geleitetes Licht streut und das Material diffus erscheinen lassen.

Gemäß dem hier vorgeschlagenen Verfahren werden die Laserpulse räumlich statistisch um einen räumlichen Sollwert verteilt in das Material eingebracht.

Der räumliche Sollwert kann beispielsweise durch einen Punkt oder eine Koordinate auf dem Material gegeben sein. Der räumliche Sollwert kann aber auch durch eine Trajektorie oder eine Punkteschar auf dem Material gegeben sein.

Der räumliche Sollwert kann dabei der eigentlich vorgesehenen Bearbeitungstrajektorie entsprechen, also beispielsweise einer zu legenden Schweißnaht, einer einzubringenden Trennkontur und/oder einer einzubringenden Oberflächenbearbeitung. Mit anderen Worten handelt es sich bei dem räumlichen Sollwert um die räumliche Position, an der herkömmlicher Weise die Materialbearbeitung stattgefunden hat und entsprechend die Laserpulse zur Bearbeitung eingetragen wurde.

Räumlich statistisch um einen räumlichen Sollwert verteilte Laserpulse weisen demnach eine statistische Verteilung von räumlichen Abständen zu dem räumlichen Sollwert auf, so dass sich durch die räumliche Verteilung die Laserpulse in unregelmäßigen Abständen zu dem räumlichen Sollwert in das Material eingebracht werden.

Die Laserpulse weisen jedoch auch einen unterschiedlichen Abstand zueinander auf. Aus der räumlichen Verteilung der Abstände ergibt sich beispielsweise über eine Fouriertransformation eine Ortsfrequenzverteilung der eingebrachten Laserpulse in dem Ortsfrequenzraum. Je unterschiedlicher die Abstände sind, desto größer ist die Bandbreite der Ortsfrequenzverteilung. Insbesondere können sowohl die Abstände zum räumlichen Sollwert als auch die Ortsfrequenzverteilung einer statistischen Verteilung entsprechen.

Dies hat den Vorteil, dass die Laserpulse in einem unregelmäßigen Abstand zueinander in das Material eingebracht werden, so dass störende optische Effekte, wie beispielsweise Interferenz, verringert oder vermieden werden.

Die Laserpulse können auch energetisch statistisch um einen energetischen Sollwert verteilt in das Material eingebracht werden.

Der energetische Sollwert kann beispielsweise eine entsprechend gewählte Energie sein. Durch die unterschiedlich eingebrachten Energien können beispielsweise die Materialmodifikationen eine unterschiedliche Größe aufweisen. Dadurch können regelmäßig auftretende Muster auf der bearbeiteten Materialoberfläche oder im bearbeiteten Material noch weiter unterbrochen werden.

Die Laserpulse können in mindestens einer räumlichen Dimension statistisch verteilt sein.

Dies kann bedeuten, dass die Laserpulse beispielsweise entlang einer x-Achse oder einer y-Achse oder einer z-Achse eine statistische Verteilung aufweisen können.

Dies kann aber auch bedeuten, dass die Laserpulse in zwei oder drei Dimensionen eine solche statistische Verteilung aufweisen können.

Beispielsweise können die Laserpulse entlang einer x-Achse eine Gaußverteilung aufweisen. Der Abstand der Laserpulse entlang der x-Achse ist dann beispielsweise ebenfalls Gaußverteilt. Dies liegt darin begründet, dass die Fouriertransformation einer Gaußfunktion ebenfalls eine Gaußfunktion ist.

Beispielsweise können die Laserpulse auch entlang einer x- und einer z-Achse eine Gaußverteilung aufweisen. Dann werden die Laserpulse entlang der Materialoberfläche und der Materialtiefe statistisch verteilt.

Der Laserstrahl und das Material können relativ zueinander mit einem Vorschub verschoben werden.

Relativ zueinander verschiebbar bedeutet, dass sowohl der Laserstrahl translatorisch relativ zu einem ortsfesten Material verschoben werden kann als auch das Material relativ zum Laserstrahl verschoben werden kann, oder es findet eine Bewegung sowohl des Materials als auch des Laserstrahls statt.

Dadurch kann insbesondere der Fokus des Laserstrahls an verschiedenen Orten des Materials platziert werden, um Laserpulse einzubringen. Die Laserpulse liegen hierbei insbesondere auf der sogenannten Vorschubtrajektorie. Beispielsweise kann die Vorschubtrajektorie gerade oder gekrümmt sein. Insbesondere ist die lokale Vorschubrichtung stets die y-Richtung, während die z-Achse parallel zur Oberflächennormalen steht und die x-Achse senkrecht zur y-Achse parallel zur Materialoberfläche ausgerichtet ist.

Beispielsweise kann dadurch der Laserstrahl entlang mit einem Vorschub bewegt werden, während die Laserpulse in oder auf das Material abgegeben werden.

Insbesondere können die Laserpulse mit einer zeitlichen statistischen Verteilung um einen zeitlichen Sollwert während des Vorschubs abgegeben werden.

Dadurch kann insbesondere eine zeitliche statistische Abgabe der Laserpulse zu einer räumlich statistischen Verteilung der Laserpulse in dem Material führen, wobei der Vorschub dann bevorzugt gleichförmig stattfindet.

Wird beispielsweise eine Folge von Laserpulsen von dem Laser abgegeben, so weisen die Pulse zeitliche Abstände zueinander auf. Insbesondere ergibt sich damit aus dem zeitlichen Verlauf über eine Fouriertransformation eine Frequenz der Laserpulsabgabe in dem Frequenzraum. Sind zudem die zeitlichen Abstände der Laserpulse unterschiedlich groß, so sind die Laserpulse um die Frequenz der Laserpulsabgabe in dem Frequenzraum verteilt.

Zeitlich statistisch um einen Sollwert verteilte Laserpulse weisen demnach eine Verteilung von zeitlichen Abständen zueinander auf, so dass sich durch die zeitliche Verteilung ein zeitlich unregelmäßiges Einbringen der Laserpulse in das Material ergibt. Der Sollwert bestimmt hierbei die zeitliche Größenordnung innerhalb der die Laserpulsabgabe stattfindet, während die statistische Verteilung gewissermaßen die Feinstruktur der Laserpulsabgabe bestimmt. Werden der Laserstrahl und das Material während der Beaufschlagung mit den Laserpulsen mit einem Vorschub verfahren, so ergibt sich aus der zeitlichen statistischen Verteilung um den Sollwert eine räumliche statistische Verteilung um einen Sollwert.

Der zeitliche Sollwert kann hierbei beispielsweise eine Grundfrequenz des Lasers sein, oder ein Systemtakt sein. Der Sollwert kann aber auch ein beliebiges Triggersignal sein.

Die statistische Verteilung der Laserpulse kann einer Gaußverteilung oder einer Gleichverteilung oder einer Dreiecksverteilung oder einer Sägezahnverteilung entsprechen.

Beispielsweise kann der räumliche Sollwert dem Erwartungswert der Gaußverteilung entsprechen und die statistische Verteilung kann durch eine Halbwertsbreite charakterisiert sein. Beispielsweise kann der Erwartungswert eine gerade Trajektorie auf dem Material sein und die Standartabweichung kann 10µm betragen, dann werden mehr als 68% der Laserpulse um die Trajektorie innerhalb von ± 10µm abgegeben.

Beispielsweise kann die räumliche statistische Verteilung eine Gleichverteilung sein, wobei jeder Abstand in einem Intervall um einen Sollwert mit der gleichen Wahrscheinlichkeit auftritt. Beispielsweise kann der Sollwert durch die Mitte des Materials gegeben sein. Das Intervall kann ± 100µm um den Mittelpunkt der Materialoberfläche sein. Dann ist es gleich wahrscheinlich, dass die Laserpulse einen Abstand von 7µm, -8,5µm, 9µm, 9,3µm, -12µm, 56,2µm, -99µm und 100µm zum Mittelpunkt aufweisen.

Beispielsweise kann die räumliche statistische Verteilung eine Dreiecksverteilung sein. Dann kann der räumliche Sollwert der wahrscheinlichste Wert sein und die Schwankungsbreite wird durch die Länge der Schenkel der Wahrscheinlichkeitsverteilung bestimmt. Beispielsweise kann die Schwankungsbreite -5µm bis +10µm betragen, während der Sollwert 20µm relativ zu einem momentan angefahrenen Punkt auf der Vorschubtrajektorie betragen kann. Dementsprechend kann die Dreiecksverteilung eine intrinsische Asymmetrie aufweisen.

Beispielsweise kann die räumliche statistische Verteilung eine Sägezahnverteilung sein. Der wahrscheinlichste Wert kann dann der räumliche Sollwert sein und die Schwankungsbreite wird durch die Länge der abfallenden Flanken der Wahrscheinlichkeitsverteilung bestimmt. Beispielsweise kann der Sollwert 30µm betragen, während die Schwankungsbreite +11µm beträgt. Die Laserpulse weisen dann dementsprechend einen räumlichen Abstand von 30µm bis 41µm auf.

Beispielsweise kann der zeitliche Sollwert dem Erwartungswert der Gaußverteilung entsprechen. Beispielsweise kann der Erwartungswert durch einen konkreten Zeitpunkt gegeben sein und die Standartabweichung kann 20µs betragen, dann werden mehr als 68% der Laserpulse um die Trajektorie innerhalb von ± 20µs abgegeben. Beispielsweise kann im Zeitfrequenzraum der Sollwert durch eine Frequenz gegeben sein, beispielsweise die Grundfrequenz des Lasers oder einen regelmäßigen Systemtakt. Dann können die Laserpulse im zeitfrequenzraum um die Grundfrequenz entsprechend einem Erwartungswert verteilt sein.

Beispielsweise kann die energetische statistische Verteilung eine Sägezahnverteilung sein. Beispielsweise kann der Sollwert 0,1mJ betragen, während die Schwankungsbreite +0,4mJ beträgt. Die Laserpulse weisen dann dementsprechend Energie in dem Bereich von 0,1mJ bis 5mJ auf.

Insbesondere können die Laserpulse eine räumliche statistische Verteilung und eine energetische statistische Verteilung und/oder eine zeitliche statistische Verteilung aufweisen.

Allgemein kann die statistische Verteilung auch zusammengesetzt sein aus verschiedenen statistischen Verteilungen. Es ist beispielsweise möglich eine Normalverteilung und eine Gleichverteilung zu überlagern. Es kann aber auch sein, dass die statistische Verteilung verzerrt ist. Beispielsweise kann die Gaußverteilung auch einen Skew aufweisen.

Durch die statistische Verteilung der Laserpulse kann besonders einfach eine regelmäßige Struktur unterbrochen und randomisiert werden.

Insbesondere kann die statistische Verteilung einstellbar sein.

Beispielsweise ist die Halbwertsbreite einer Gaußschen-Verteilung einstellbar sein oder der Erwartungswert der Verteilung kann einstellbar sein.

Beispielsweise lässt sich die zeitliche Verteilung genauer als 1µs einstellen. Das kann bedeuten, dass die zeitliche Abgabe des Laserpulses auf 1µs genau eingestellt wird, so dass die zeitliche Laserpulsabgabe der gewünschten zeitlichen Verteilung folgt.

Insbesondere kann die Vorschubgeschwindigkeit so gewählt sein, dass unmittelbar nacheinander abgegebene Laserpulse nicht überlappen.

Dies ist insbesondere der Fall, wenn die Vorschubgeschwindigkeit größer ist als das Verhältnis aus dem Durchmesser des Laserfokus und dem zeitlichen Abstand der Laserpulse.

Wird diese minimale Vorschubgeschwindigkeit überschritten, so überlappen die eingebrachten Materialmodifikationen nicht. Insbesondere wird dadurch eine Einzelpulsmodifikation erreicht, die nicht auf der Wärmeakkumulation nacheinander eingebrachter Pulse beruht.

Beispielsweise beträgt der Durchmesser des Laserfokus 5µm und die Repetitionsrate der Laserpulse beträgt 10kHz. Somit ergibt sich eine minimale Vorschubgeschwindigkeit von 0,5 m/s.

Insbesondere kann die Variation der räumlichen und/oder zeitlichen Verteilung beispielsweise in Kurven angepasst werden, die typischerweise mit einer geringeren Geschwindigkeit abgefahren werden. Dadurch kann vermieden werden, dass nacheinander eingebrachte Laserpulse in dem Werkstück überlappen.

Beispielsweise würden bei gleichbleibenden zeitlichen Abständen aufeinanderfolgende Laserpulse bei einer geringen Geschwindigkeit im Material überlappen. Wird hingegen die zeitliche statistische Verteilung verbreitert, beispielsweise indem die Standartabweichung und/oder der Erwartungswert vergrößert wird, so kann ein solcher Überlapp vermieden werden.

Die statistische Verteilung der Laserpulse kann in Abhängigkeit von der aktuellen Vorschubgeschwindigkeit angepasst werden.

Die kann bedeuten, dass bei einer ersten, geringen Vorschubgeschwindigkeit eine erste statistische Verteilung verwendet wird und bei einer zweiten, höheren Vorschubgeschwindigkeit eine zweite statistische Verteilung verwendet wird.

Beispielsweise kann bei einer geringen Vorschubgeschwindigkeit eine Gleichverteilung der Laserpulse verwendet werden, da der räumliche Abstand der Laserpulse möglichst groß gehalten werden muss, um einen Pulsüberlapp zu vermeiden. Gleichzeitig kann es bei einer höheren Vorschubgeschwindigkeit sinnvoll sein eine Gaußverteilung der Laserpulse vorzunehmen, so dass die Laserpulse stärker auf die Vorschubtrajektorie konzentriert sind.

Es ist aber auch möglich, dass die Schwankungsbreite (beispielsweise der Erwartungswert) bei größeren Vorschubgeschwindigkeiten kleiner eingestellt wird, also bei größeren Vorschubgeschwindigkeiten, so dass die tatsächliche räumliche Schwankungsbreite der Laserpulse auf dem Material immer ähnlich oder gleich ist.

Insbesondere kann die zeitliche statistische Verteilung an die Vorschubgeschwindigkeit angepasst werden, so dass beispielsweise die durch die Laserpulse auf dem Material erzeugte räumliche statistische Verteilung gleichbleibt oder sich verändert, während die Vorschubgeschwindigkeit variiert wird.

Die statistische Verteilung kann in Abhängigkeit von der Prozessphase angepasst werden.

Beispielsweise kann für einen ersten Bearbeitungsprozess eine erste statistische Verteilung sinnvoll sein und für einen zweiten statistischen Prozess kann eine zweite statistische Verteilung sinnvoll sein.

Beispielsweise kann es beim Bearbeiten einer Oberfläche sinnvoll sein eine mäandernde Vorschubtrajektorie zu verwenden, wobei die Laserpulse räumlich Gaußförmig um den Mäander verteilt sind. Indem benachbarte Linien des Mäanders antiparallel zueinander abgefahren werden und die Gaußförmige Verteilung an den Flanken überlappt kann in der Fläche eine homogene Bearbeitung des Materials erreicht werden.

In einem Trennprozess hingegen kann es von Vorteil sein, wenn das Material in Richtung der Vorschubtrajektorie vorlaufend bearbeitet wird, also teilweise Laserpulse vor die Sollposition des Laserstrahls gesetzt werden. Beispielsweise kann demnach eine räumliche Sägezahnverteilung verwendet werden, um dadurch eine besonders saubere Trennung des Materials zu erreichen. In diesem Fall würden in Richtung der Vorschubrichtung Laserpulse vereinzelt vor die aktuelle Position des Laserstrahls gelenkt werden, so dass das Material dort bereits gezielt geschwächt wird. Dementsprechend könnte eine gezielte Risspropagation von dem aktuellen Ort des Laserstrahls, der beispielsweise mit dem Sollwert übereinstimmt, hin zu der vereinzelten Position des Laserpulses erfolgen.

Das vorliegende erfindungsgemäße Verfahren kann in zahlreichen Bearbeitungsprozessen vorteilhaft eingesetzt werden.

Beispielsweise kann der Bearbeitungsprozess des Materials ein Trennprozess sein oder ein Tiefengravurprozess sein, bei dem mit geringem räumlichen Überlapp aufeinanderfolgender Laserpulse Material in Mehrfachüberfahren abgetragen wird. Durch die Randomisierung der Laserpulsabgabe in Vorschubrichtung kann eine gleichmäßige Verteilung der Laserpulse erreicht werden, so dass eine qualitativ hochwertige Schnittkante oder Gravur entsteht. Insbesondere ist die Gravur dann frei von periodischen Strukturen, so dass es keine störenden Beugungserscheinungen gibt, die den optischen Eindruck stören könnten.

Zudem kann der Bearbeitungsprozess bei der Metallstrukturierung oder beim Flächenabtrag eingesetzt werden. Hierbei hängt der optische Eindruck stark von der Oberflächenqualität ab. Insbesondere wird durch die Randomisierung der Laserpulse erreicht, dass der Oberfläche des Materials keine unerwünschten Muster aufgeprägt werden.

Ein weiterer wichtiger Bearbeitungsprozess ist die sogenannte Dimple-Strukturierung einer Oberfläche für eine Anti-Glare-Funktionalisierung. Mit anderen Worten können der Oberfläche des Materials Grübchen oder Krater durch die Laserpulse aufgeprägt werden, an denen auftreffendes Licht gestreut wird. Dadurch kann eine matte Oberflächenbeschaffenheit des Materials erreicht werden.

Insbesondere können mit dem erfindungsgemäßen Verfahren besonders vorteilhafte optische und haptische Zieleigenschaften eines Materials nach einer Dimple-Strukturierung erreicht werden. Beispielsweise kann eine solche Dimple-Strukturierung bei der Bearbeitung eines Displayglases, insbesondere eines Deckglases verwendet werden. Beispielsweise kann hierbei der Sparkle ("Funkeln"), ein Maß für die irreguläre Intensitäts- und Farbschwankungen, eingestellt werden. Der Sparkle hängt hierbei mit der Größe der Dimples zusammen. Insbesondere kann der Sparkle auf weniger als 4% eingestellt werden. Wenn das Glas über einem Display mit einer besonders hohen Auflösung angeordnet wird, so ist es vorteilhaft die Größe der Dimples zu reduzieren, um einen geringen Sparkle-Wert sicherzustellen.

Ein weiterer wichtiger Paramter ist die "Distinctness of Image". Dieser Parameter ist ein Maß für die Klarheit der zu lesenden Nutzerinformation. Die "Distinctness of Image" skaliert hierbei invers mit der Streuung beziehungsweise der Diffusion des Lichts durch das Displaydeckglas. Die "Distinctness of Image" kann mit dem erfindungsgemäßen Verfahren auf mehr als 70% eingestellt werden. Insbesondere kann die "Distinctness of Image" über die Flächenfüllung des Displayglases mit den Dimples eingestellt werden, wobei die Flächenfüllung bevorzugt zwischen 40% und 95% der Displayfläche beträgt.

Ein weiterer wichtiger Parameter ist die Diffusion, die ein Maß für dir Streustärke des Displayglases ist. Insbesondere hängt die Diffusion auch von der Form und der Beschaffenheit der einzelnen Dimples ab. Die Diffusion des Displayglases kann beispielsweise auf mehr als 22% eingestellt werden.

Zudem kann mit dem erfindungsgemäßen Verfahren ein Moiré-Effekt vermieden werden, der typischerweise auftritt, wenn die Pixelperiode des Displaypanels in der Größenordnung der Periode der Dimpleanordnung ist. In dem die Dimples über eine statistische Verteilung in das Displayglas randomisiert eingebracht werden kann ein Moiré-Effekt vermieden werden.

Insbesondere können die Materialmodifikation auch als Bumps, also Erhöhungen des Materials ausgestaltet sein, die durch das kurzeitige Aufschmelzen und die Wärmeexpansion des Materials entstehen.

Insbesondere werden durch die Materialmodifikationen, insbesondere die Erhöhungen und Vertiefungen auch eine haptische Veränderung der Materialoberfläche erreicht.

Als haptischer Zielwert kann beispielsweise die Rauheit dienen. Insbesondere kann durch die Dichte der Modifikationen der haptische Eindruck angepasst werden. Eine höhere Dichte erzeugt typisch einen stärkeren beziehungsweise einen raueren haptischen Eindruck.

Durch eine sukzessive Wechselwirkung desselben Materialbereichs mit mindestens zwei Laserpulsen können auch sogenannte laserinduzierte periodische Oberflächenstrukturen (laserinduced periodic surface structures, im Folgenden "LIPSS" genannt) erzeugt werden.

Dimples und LIPSS eignen sich hierbei zur Funktionalisierung von Oberflächen von Bauteilen, wobei insbesondere optische Eigenschaften, Benetzungseigenschaften und tribologische Eigenschaften beeinflusst werden können.

In einer besonders bevorzugten Ausführungsform werden mit dem Verfahren Dimples mit einem Durchmesser zwischen 13µm und 20µm erzeugt, wobei die laserinduzierten periodischen Oberflächenstrukturen eine Periodizität zwischen 650nm und 1000nm aufweisen.

Die oben gestellte Aufgabe wird weiterhin durch eine Vorrichtung zum Bearbeiten eines Materials mit den Merkmalen des Anspruchs 10 gelöst. Vorteilhafte Weiterbildungen des Verfahrens ergeben sich aus den Unteransprüchen sowie der vorliegenden Beschreibung und den Figuren.

Entsprechend der Erfindung wird eine Vorrichtung zum Bearbeiten eines Materials mit den Merkmalen des Anspruchs 9 vorgeschlagen, umfassend einen Systemtaktgenerator, der dazu eingerichtet ist, ein Systemtaktsignal bereitzustellen, einen Statistikgenerator, der dazu eingerichtet ist, das Systemtaktsignal zu empfangen, dem Systemtaktsignal eine zeitliche statistische Verteilung aufzuprägen und ein Statistiktaktsignal bereitzustellen, einen Laser, der dazu eingerichtet ist, das Statistiktaktsignal oder das Systemtaktsignal zu empfangen und beim Empfang des Taktsignals einen Laserpuls abzugeben, eine Vorschubvorrichtung, die dazu eingerichtet ist, den Laserstrahl und das Material relativ zueinander zu bewegen und eine Bearbeitungsoptik, das dazu eingerichtet ist, den Laserstrahl in eine Fokuszone zu überführen und in das Material einzubringen, wodurch das Material bearbeitet wird.

Der Systemtaktgenerator kann hierbei den Takt in der gesamten Vorrichtung bereitstellen, so dass sich alle verwendeten Geräte auf einen gemeinsamen Takt synchronisieren können. Der Systemtaktgenerator gibt hierbei beispielsweise gepulstes Grundsignal mit einer Grundfrequenz aus.

Hierbei ist es ferner möglich, dass das Grundsignal des Systemtaktgenerators direkt beispielsweise dem zeitlichen Sollwert der statistischen Verteilung der zeitlichen Pulsabgabe entspricht. Es ist aber auch möglich, dass das Grundsignal durch einen geeigneten Multiplikator geleitet werden muss, um den Sollwert der zeitlichen Pulsabgabe bereitzustellen. Im Folgenden wird stets ersteres angenommen. Es ist aber auch möglich, dass der Systemtaktgenerator nur vereinzelte Signalpulse als Systemtaktsignal ausgibt, also das Systemtaktsignal keine feste Grundfrequenz aufweist.

Der Systemtaktgenerator kann beispielsweise in dem gepulsten Laser selbst verbaut sein und beispielsweise der Repetitionsrate entsprechen, oder ein externer Pulsgenerator sein. Es ist aber auch möglich, dass der Systemtakt unregelmäßig erscheint und lediglich ein allgemeines Triggersignal darstellt und von einer Vorschubvorrichtung oder einer Positionsoffsetvorrichtung abgegeben wird.

Der Statistikgenerator empfängt das Systemtaktsignal und kann den Signalpulsen des Systemtaktsignals eine statistische Verteilung aufprägen. Beispielsweise können die Signalpulse eine Gaußverteilung um die ursprünglichen Signalpulse aufweisen.

Der Statistikgenerator kann beispielsweise eine FPGA oder ein Computer oder ein Mikrochip oder ein ASIC (application-specific integrated circuit) oder ein Microcontroller sein. Hierüber lassen sich beispielsweise besonders einfach verschiedene statistische Verteilungen einstellen.

Das Statistiktaktsignal kann von dem Laser empfangen werden, welcher vorzugsweise eine Pulse-on-Demand Funktionalität aufweist. Dementsprechend gibt der Laser jedes Mal einen Laserpuls ab, wenn er einen Puls des Systemtaktsignals empfängt. Die abgegebenen Laserpulse weisen somit denselben zeitlichen Verlauf auf wie die Pulse des Statistiktaktsignals. Mit anderen Worten wird das Pulse-On-Demand Signal vom Systemtaktgenerator für den gepulsten Laser mit dem Statistikgenerator manipuliert.

Die statistische Variation der empfangenen Pulse des Grundsignals kann hierbei von dem Statistikgenerator mit einer Taktung von über 1 MHz erfolgen. Dies hat den Vorteil, dass selbst bei einer sehr hohen Taktung der Statistikgenerator den Pulsen des Grundsignals noch sicher dieselbe statistische Verteilung aufprägen kann.

Die Vorrichtung weist zudem eine Bearbeitungsoptik auf, die den Laserstrahl in das Material fokussieren kann. Insbesondere kann die Bearbeitungsoptik einen Winkelversatz in einen Ortsversatz überführen, so dass bei einer weiter unten beschriebenen statistischen Winkelablenkung besonders einfach eine statistische Ortsablenkung erzeugt wird.

Der Laserstrahl kann mittels der Bearbeitungsoptik oder einer Scannereinheit in/oder auf das Werkstück fokussiert werden, wobei die Bearbeitungsoptik eine numerische Apertur von NA>0,01, aufweist und die Scannereinheit eine numerische Apertur von NA<0,1 aufweist.

Beispielsweise weist die Bearbeitungsoptik eine numerische Apertur zwischen 0,01 und 0,2, insbesondere von 0,04 auf.

Die numerische Apertur NA gibt hierbei im Wesentlichen den Öffnungswinkel des Laserstrahls im Fokus an, wobei eine große numerische Apertur einen großen Öffnungswinkel bedeutet. Dadurch kann die Ausdehnung der Fokuszone in Strahlausbreitungsrichtung eingestellt werden und somit auch die Größe der Materialmodifikation in Strahlausbreitungsrichtung.

Die Vorrichtung kann zudem eine Vorschubvorrichtung umfassen, welche den Laserstrahl und das Material relativ zueinander zu bewegt.

Die Vorschubvorrichtung kann bevorzugt eine Achsvorrichtung und/oder eine Scannervorrichtung umfassen.

Mit der Achsvorrichtung kann beispielsweise das Material mechanisch bewegt werden, während mit einer Scannervorrichtung der Laserstrahl über das Material bewegt wird. Insbesondere kann die Achsvorrichtung ein XYZ-Tisch mit Schrittmotorsteuerung sein. Es kann aber auch sein, dass die Achsvorrichtung mit Piezoverstellungen ausgebildet ist, um eine möglichst schnelle Verstellung zu erreichen. Die Scannervorrichtung kann insbesondere ein Galvanoscanner sein. Es kann aber auch sein, dass die Vorschubvorrichtung eine Rolle-zu-Rolle Vorrichtung ist.

Die Vorschubvorrichtung kann den Systemtakt empfangen.

Beispielsweise kann der Systemtakt zur Taktung eines Schrittmotors eingesetzt werden, so dass eine gewisse Anzahl von Schritten pro Sekunde durchgeführt wird. Durch das Einstellen eines Multiplikators am Motor kann somit besonders einfach die Vorschubgeschwindigkeit eingestellt werden. Beispielsweise kann der Systemtakt ein regelmäßiger Takt sein, mit dem der Scanner den Laserstrahl periodisch über das Material ablenkt.

Die Vorschubvorrichtung kann das das Statistiktaktsignal empfangen.

Beispielsweise kann die Vorschubvorrichtung dann eine ungleichmäßige Vorschubtrajektorie ausbildet. Dadurch wird ebenfalls eine statistische Verteilung um die Vorschubtrajektorie erzeugt, insbesondere auch in Richtung der Vorschubtrajektorie.

Es ist aber auch möglich, dass die Vorschubvorrichtung den Systemtakt bereitstellt.

Die Vorschubvorrichtung gibt somit selbst den Systemtakt aus, die zum Statistikgenerator gesendet wird. Damit kann eine externe Komponente zum Erzeugen eines Systemtakts eingespart werden und die Laserpulsabgabe wird automatisch auf die Vorschubvorrichtung und somit auf die aktuelle Position und Geschwindigkeit angepasst.

Im einfachsten Fall kann die Vorschubvorrichtung jedes Mal ein Systemtaktsignal ausgeben, wenn sie eine gewisse Länge verfahren wurde. Dann können die Laserpulse automatisch in Abhängigkeit von dem zurückgelegten Weg abgegeben werden und sich unabhängig von der Vorschubgeschwindigkeit. In diesem Fall spricht man von einem positionssynchronen Signal, welches durch die Vorschubvorrichtung ausgegeben wird. Insbesondere kann aus dem positionssynchronen Signal die aktuelle Geschwindigkeit abgeschätzt werden, um so gegebenenfalls eine Anpassung der statistischen Verteilung vorzunehmen

Die Vorrichtung kann eine Positionsoffsetvorrichtung aufweisen, die dazu eingerichtet ist, das Statistiktaktsignal zu empfangen und den Laserpulsen eine räumliche statistische Verteilung um einen räumlichen Sollwert aufzuprägen.

Insbesondere kann die Positionsoffsetvorrichtung ein elektrooptischer und/oder akustooptischer Deflektor sein und/oder auf Coherent Beam Combining basieren. Die Positionsoffsetvorrichtung kann das Statistiktaktsignal empfangen und den Laserpuls entsprechend ablenken.

In einem akustooptischen Deflektor wird mit einer Wechselspannung an einem Piezokristall in einem optisch angrenzenden Material eine akustische Welle erzeugt, die den Brechungsindex des Materials periodisch moduliert. Die Welle kann hierbei durch das optische Material propagieren, beispielsweise als propagierende Welle oder als Wellenpaket, oder als stehende Welle ausgebildet sein. Durch die periodische Modulation des Brechungsindex wird hierbei ein Beugungsgitter für einen einfallenden Laserstrahl realisiert. Ein einfallender Laserstrahl wird an dem Beugungsgitter gebeugt und dadurch zumindest teilweise unter einem Winkel zu seiner ursprünglichen Strahlausbreitungsrichtung abgelenkt. Die Gitterkonstante des Beugungsgitters und somit der Ablenkwinkel hängt dabei unter anderem von der Wellenlänge der akustischen Welle ab und dadurch von der Frequenz der angelegten Wechselspannung.

Elektrooptische Deflektoren basieren auf Prismen aus elektrooptischen Kristallen. Durch Anlegen einer Spannung wird der Brechungsindex des elektrooptischen Kristalls verändert, so dass sich der Pfad des Laserstrahls durch das Prisma ändert.

Die räumliche statistische Verteilung mit einem elektrooptischen und/oder akustooptischen Deflektor kann mit einer Taktung von über 1 MHz erfolgen. Dementsprechend können mehrere Millionen Umpositionierungen des Laserpulses pro Sekunde erfolgen. Insbesondere kann durch den elektrooptischen und/oder den akustischen Deflektoren eine Einzelpulsgenaue Umpositionierung der Laserpulse erfolgen, so dass jeder einzelne Laserpuls an einem anderen Ort des Materials eingebracht wird.

Die Positionsoffsetvorrichtung kann aber auch ein Taumelprisma sein. Ein Taumelprisma umfasst hierbei ein Prisma, welches eine Winkelablenkung des Laserstrahls vornimmt. Durch eine mechanische Ablenkung des Prismas wird eine räumliche Ablenkung des Laserstrahls erreicht.

Die Wellenlänge der Laserpulse kann zwischen 200nm und 3000nm betragen. Dadurch ist es möglich das Verfahren an viele verschiedene Materialien und Bearbeitungsprozesse anzupassen.

Die Repetitionsrate des Lasers kann zwischen 10kHz und 100MHz, insbesondere zwischen 19kHz und 2MHz liegen. Die Repetitionsrate bestimmt hierbei in welchem zeitlichen Abstand mindestens zwei aufeinanderfolgende Laserpulse abgegeben werden.

Der Laserpuls kann aus einer Vielzahl von Laserburstpulsen zusammengesetzt sein, insbesondere aus 2 bis 100 Laserburstpulsen zusammengesetzt sein. Die Laserburstpulse können hierbei mit einer besonders hohen Frequenz von über 1 GHz anstelle eines einzelnen Laserpulses abgegeben werden. Anstelle der Einzelpulsablenkung tritt in diesem Fall die Einzellaserburstpulsablenkung.

Die Fluenz kann größer als 0,05J/cm^2 sein, insbesondere zwischen 0,1J/cm^2 und 50J/cm^2 betragen. Dadurch ist es möglich das Verfahren an viele verschiedene Materialien und Bearbeitungsprozesse anzupassen.

Die Laserpulsdauer kann zwischen 10fs und 100ns betragen, insbesondere zwischen 100fs und 100ps betragen.

Beispielsweise kann die Länge der Laserpulse zwischen 100ps und 100ns betragen, insbesondere zwischen 1ns und 20ns betragen, wobei die Wellenlänge zwischen 300nm und 550nm betragen kann, insbesondere 355nm betragen kann, wobei die Repetitionsrate der Laserpulse zwischen 10kHz und 100kHz betragen kann, insbesondere zwischen 10kHz und 50kHz betragen kann, wobei die Laserpulse eine Energie zwischen 60µJ und 300µJ aufweisen können und pro Spot 1 bis 4 Pulse abgegeben werden können.

Beispielsweise kann die Länge der Laserpulse zwischen 200fs und 1000fs betragen, insbesondere zwischen 300fs und 450fs betragen, wobei die Wellenlänge zwischen 900nm und 2300nm betragen kann, insbesondere 1030nm betragen kann, wobei die Repetitionsrate der Laserpulse zwischen 10kHz und 400kHz betragen kann, wobei die Laserpulse in Laserbursts abgegeben werden, wobei jeder Laserburst zwischen 2 und 4 Laserpulsen enthalten kann, wobei die Laserbursts eine Energie zwischen 100µJ und 400µJ aufweisen können und die numerische Apertur zwischen 0,01 und 0,2 betragen kann, insbesondere 0,08 betragen kann.

Der Laser kann insbesondere auch einen instabilen Seedlaser und einen Verstärker umfassen, wobei der instabile Seed-Laser den Statistikgenerator beinhaltet und mit einer zeitlichen statistischen Verteilung Laserpulse abgibt, wobei der Verstärker die Laserpulse des Seedlasers verstärkt.

Der Laserstrahl kann zudem eine Gauß'sche Strahlform aufweisen oder eine nicht-beugende Strahlform aufweisen.

Unter einer Gauß'schen Strahlen sind insbesondere Strahlen zu verstehen, deren Intensitätsquerschnitt einer Gauß'schen Glockenkurve entsprechen.

Unter nicht-beugenden Strahlen und/oder Bessel-artigen Strahlen sind insbesondere Strahlen zu verstehen, bei welchen eine transversale Intensitätsverteilung, propagationsinvariant ist. Insbesondere ist bei nicht-beugenden Strahlen und/oder Bessel-artigen Strahlen eine transversale Intensitätsverteilung längs einer longitudinalen Richtung und/oder Propagationsrichtung der Strahlen im Wesentlichen konstant.

Hinsichtlich der Definition und Eigenschaften nicht-beugender Strahlen wird auf das Buch "Structured Light Fields: Applications in Optical Trapping, Manipulation and Organisation", M. Wördemann, Springer Science & Business Media (2012), ISBN 978-3-642-29322-1 verwiesen. Hierauf wird ausdrücklich und vollinhaltlich Bezug genommen.

Nicht-beugende Laserstrahlen weisen demnach den Vorteil auf, dass sie eine in Strahlausbreitungsrichtung elongierte Intensitätsverteilung haben können, die deutlich größer als die transversalen Abmessungen der Intensitätsverteilung sind. Insbesondere können dadurch in Strahlausbreitungsrichtung elongierte Materialmodifikationen erzeugt werden, so dass diese besonders einfach zwei Seiten des Werkstücks durchdringen können.

Des Weiteren kann der Laserstrahl auf eine Flattop-Strahlform und/oder eine Supergaußform und/oder eine Tophat-Strahlform aufweisen.

### Kurze Beschreibung der Figuren

Bevorzugte weitere Ausführungsformen der Erfindung werden durch die nachfolgende Beschreibung der Figuren näher erläutert. Dabei zeigen:
- Figur 1: einen schematischen Aufbau einer Vorrichtung nach dem Stand der Technik;
- Figur 2A, B, C, D: einen weiteren schematischen Aufbau der erfindungsgemäßen Vorrichtung;
- Figur 3: einen weiteren schematischen Aufbau der erfindungsgemäßen Vorrichtung;
- Figur 4: ein Verfahren nach dem Stand der Technik;
- Figur 5A, B: ein erfindungsgemäßes Verfahren mit räumlicher statistischer Verteilung der Laserpulse;
- Figur 6A, B: ein erfindungsgemäßes Verfahren mit räumlicher und zeitlicher statistischer Verteilung der Laserpulse;
- Figur 7: ein weiteres erfindungsgemäßes Verfahren mit räumlicher und zeitlicher statistischer Verteilung der Laserpulse; und
- Figur 8: ein weiteres erfindungsgemäßes Verfahren mit räumlicher und zeitlicher Verteilung der Laserpulse.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

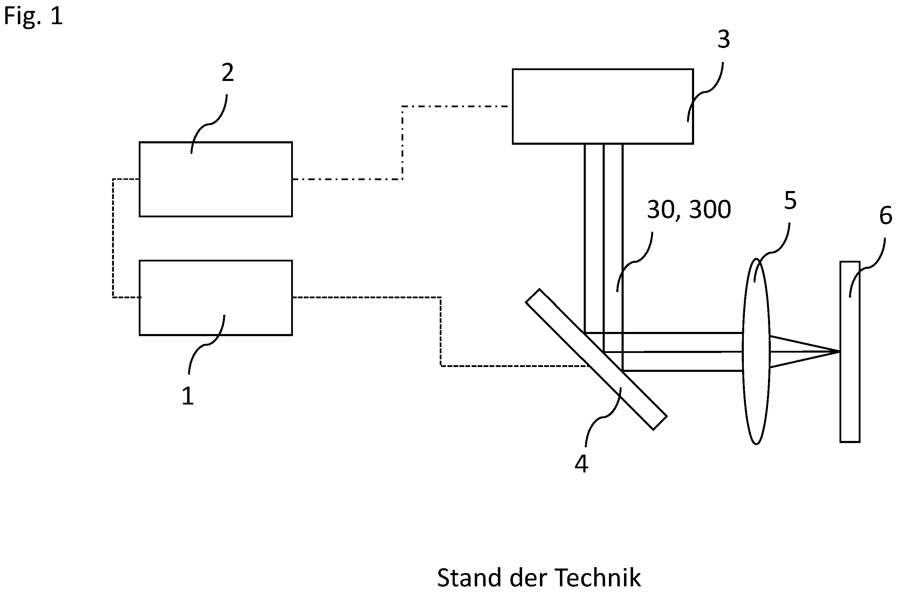

In Figur 1 ist schematisch eine erfindungsgemäße Vorrichtung zum Bearbeiten eines Materials 6 gezeigt. Die Vorrichtung weist hierbei einen Systemtaktgenerator 1 auf. Der Systemtaktgenerator 1 gibt bevorzugt Signalpulse einer festen Frequenz, das Systemtaktsignal aus. Insbesondere kann der Systemtaktgenerator 1 ein Pulsgenerator sein. Es kann aber auch sein, dass der Systemtaktgenerator 1 intrinsisch in einer der weiteren verbauten Vorrichtungselemente ausgebildet ist, wie weiter unten beschrieben.

Der Systemtaktgenerator 1 ist dazu eingerichtet das Systemtaktsignal an den Statistikgenerator 2 zu senden. Der Statistikgenerator 2 empfängt das gepulste Grundsignal des Systemtaktgenerators 1 und kann den Pulsen des Grundsignals eine statistische Verteilung aufprägen. Insbesondere kann der Statistikgenerator 2 die Abstände der Pulse des Systemtaktsignals so variieren, dass die Signalpulse des Systemtaktsignals eine statistische Verteilung aufweisen. Beispielsweise können hierzu die Abstände der Pulse des Grundsignals angepasst werden. Beispielsweise kann sich die statistische Verteilung aus den zeitlichen Abständen der angepassten Signalpulse zu den unveränderten Pulsen des Systemtaktsignals ergeben.

Diese Statistiktaktsignale können von dem Laser 3 empfangen werden. Bei jedem Signalpuls, den der Laser 3 erhält, kann der Laser 3 einen Laserpuls 300 abgeben, der entlang dem Laserstrahl 30 des Lasers 3 propagiert. Diese Funktionalität wird auch Pulse-On-Demand genannt. Der Laserpuls 30 kann dann durch eine Bearbeitungsoptik 5 in ein Material 6 oder auf die Oberfläche eines Materials 6 fokussiert werden. Demnach werden die Laserpulse 300 mit der statistischen Verteilung des Statistikgenerators 2 eingebracht.

Der Laserpuls 300 kann in dem Material 6 eine Materialbearbeitung hervorrufen, so dass eine Bearbeitung des Materials 6 stattfindet.

Die Vorschubvorrichtung 4 kann das Material 6 und den Laserstrahl 30 relativ zueinander bewegen, so dass der Laserstrahl 30 entlang der Vorschubtrajektorie mit einem Vorschub bewegt wird. Beispielsweise ist hier die Vorschubvorrichtung als Scannervorrichtung ausgebildet, mit der der Laserstrahl 30 periodisch über das Material 6 gefahren wird. Wenn während des Vorschubs die Laserpulse 300 mit der statistischen Verteilung ausgelöst werden und in das Material 6 eingebracht werden, dann liegen die Materialmodifikation den dem Material 6 ebenfalls in einer gewissen statistischen Verteilung vor. Insbesondere sei hier betont, dass die statistische Verteilung der Laserpulse 300 eine zeitliche Verteilung ist, während die statistische Verteilung der Materialmodifikationen im Material 6 durch den gleichzeitigen Vorschub eine örtliche statistische Verteilung aufweisen.

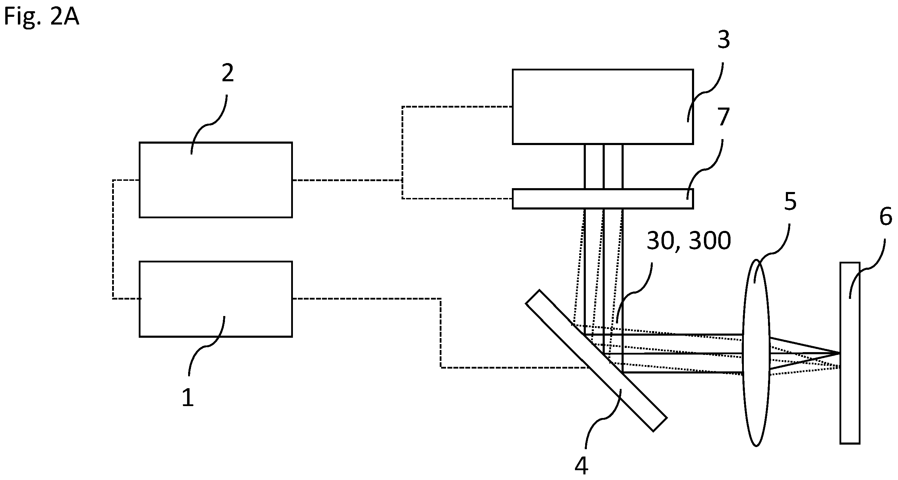

Eine erfindungsgemäße Vorrichtung ist in Figur 2A gezeigt. Hier wird die Pulserzeugung im Laser 3 analog zur Figur 1 durchgeführt. Jedoch ist in Strahlausbreitungsrichtung hinter dem Laser 3 eine Positionsoffsetvorrichtung 7 angeordnet. Die Positionsoffsetvorrichtung 7 kann beispielsweise ein akustooptischer Deflektor sein. Der akustooptische Deflektor 7 empfängt ebenfalls das Signal des Statistikgenerators 2 und kann dementsprechend einen vom Laser 3 ausgelösten Laserpulse 300 räumlich ablenken. Die zeitliche Abweichung des Signalpulses von der Grundfrequenz kann hierbei beispielsweise in eine räumliche Ablenkung übersetzt werden. Zeitgleich kann der Laser 3 das Statistiktaktsignal des Statistikgenerators 2 empfangen und den Laserpulsen 300 eine zeitliche Variation aufprägen.

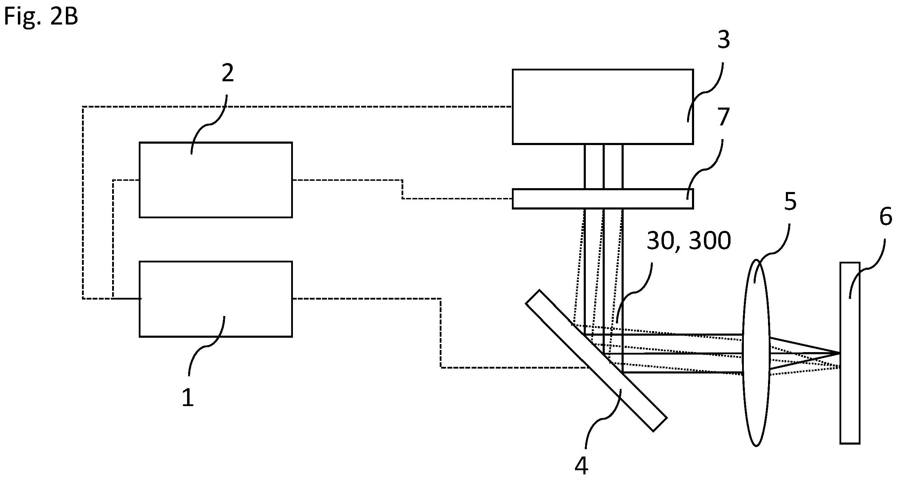

Es ist jedoch auch möglich, wie in Figur 2B gezeigt, dass lediglich die Positionsoffsetvorrichtung 7 eine räumliche statistische Verteilung der Laserpulse 300 hervorruft und die der Laser 3 über den Systemtaktgenerator 1 betrieben wird. Der Laser 3 gibt dann in regelmäßigen gemäß der Grundfrequenz Laserpulse 300 ab und nur die Positionsoffsetvorrichtung erzeugt die räumliche statistische Verteilung der Laserpulse 300.

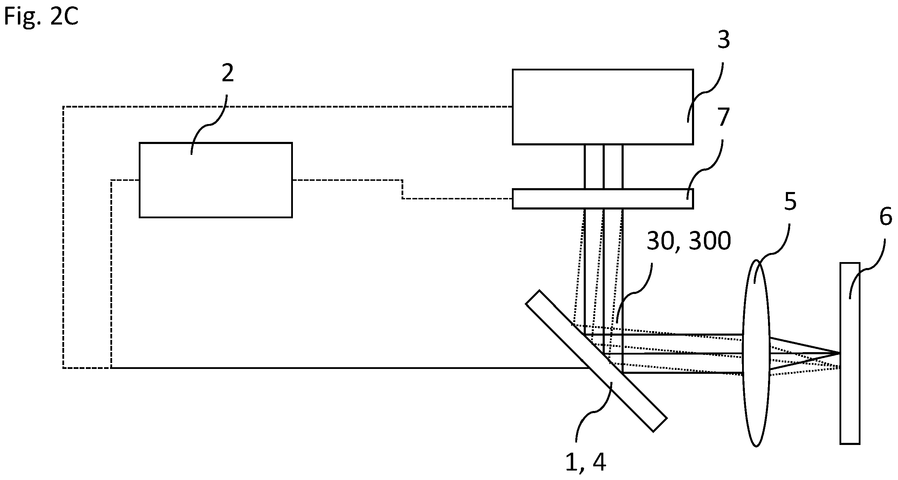

Es ist jedoch auch möglich, wie in Figur 2C gezeigt, dass die Vorschubvorrichtung 4 das Systemtaktsignal ausgibt und damit beispielsweise nach einer gewissen zurückgelegten Strecke einen Laserpuls 300 auslöst. Zusätzlich kann das Systemtaktsignal durch den Statistikgenerator 2 beeinflusst werde, so dass die Positionsoffsetvorrichtung 7 eine zusätzliche räumliche statistische Verteilung der Laserpulse 300 hervorruft.

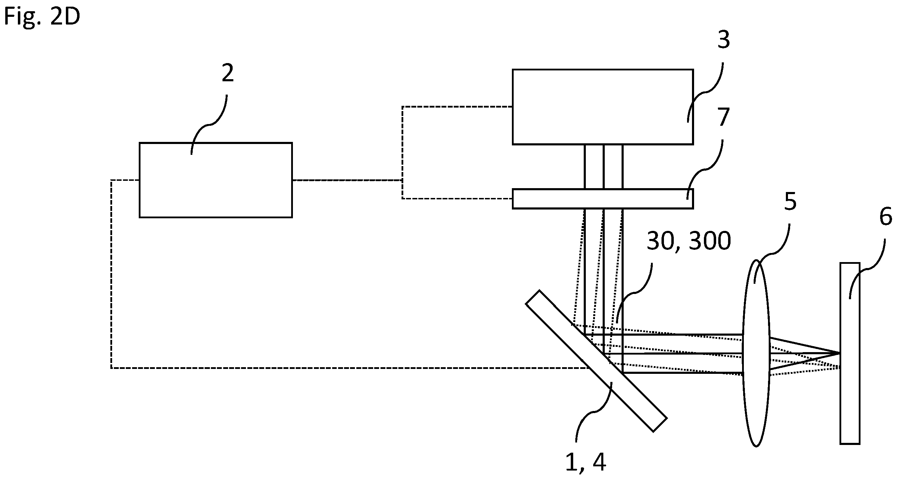

Es ist auch möglich, wie in Figur 2D gezeigt, dass die Vorschubvorrichtung 4 das Systemtaktsignal ausgibt und das Systemtaktsignal durch den Statistikgenerator 2 beeinflusst wird. Insbesondere kann somit der Laser 3 das Statistiktaktsignal empfangen, womit beispielsweise eine Pulsauslösung entsprechend der statistischen Verteilung realisiert werden kann. Zusätzlich kann die Positionsoffsetvorrichtung 7 durch das empfangene statistische Signal eine räumliche statistische Verteilung der Laserpulse 300 hervorrufen.

Es ist zudem auch möglich, dass der Laser 3 ebenfalls das Statistiktaktsignal empfängt und dadurch eine zusätzliche zeitliche statistische Verteilung aufgeprägt wird.

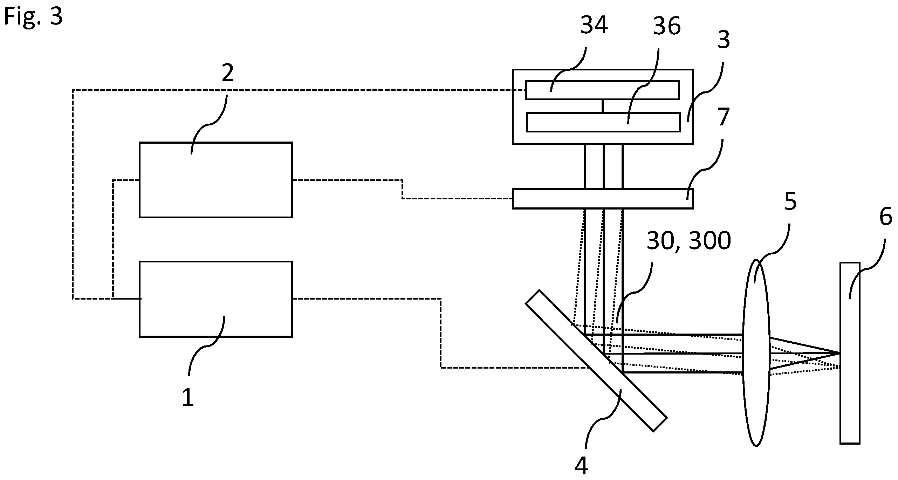

Eine weitere mögliche Ausführungsform der Vorrichtung ist in Figur 3 gezeigt. Hierbei umfasst der Laser 3 einen instabilen Seedlaser 34 und einen Verstärker 36. Empfängt der Seedlaser 34 einen Puls des Grundsignals des Systemtaktgenerators, so gibt der Seedlaser einen Laserpuls ab, der durch den Verstärker verstärkt wird. Die zeitliche Abgabe des Laserpulses durch den Seedlaser 34 wird dadurch durch die Instabilität inhärent statistisch verteilt.

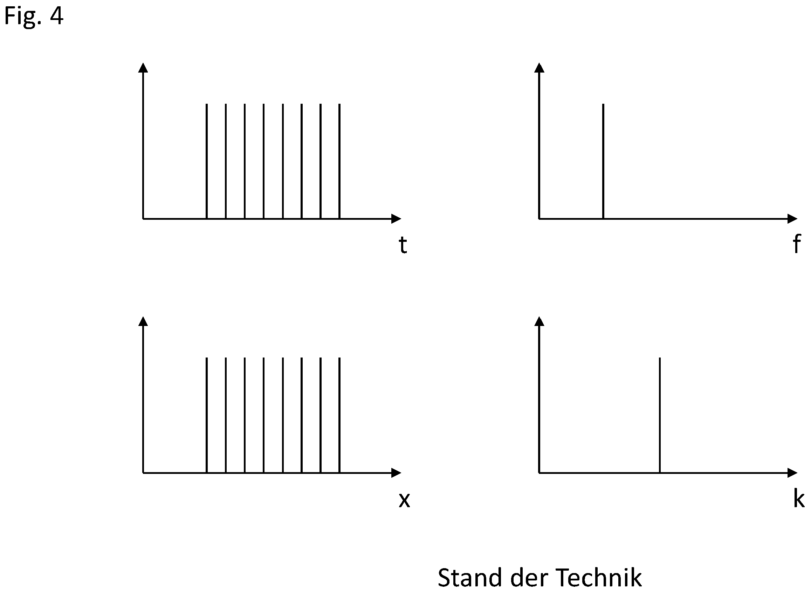

Figur 4 zeigt ein Verfahren nach dem Stand der Technik. Hierbei werden in regelmäßigen zeitlichen Abständen Laserpulse abgegeben und in das Material eingebracht. Die Laserpulse weisen deshalb lediglich eine zeitliche Frequenz auf, nämlich die Repetitionsfrequenz.

Während der Laser 3 Laserpulse 300 abgibt, kann das Material 6 relativ zum Laserstrahl 30 mit einer Vorschubvorrichtung gleichförmig bewegt werden. Dadurch weisen die Laserpulse 300 auf dem Material 6 ebenfalls einen gleichmäßigen Abstand auf, so dass die Laserpulse im Ortsfrequenzraum lediglich eine Ortsfrequenz aufweisen.

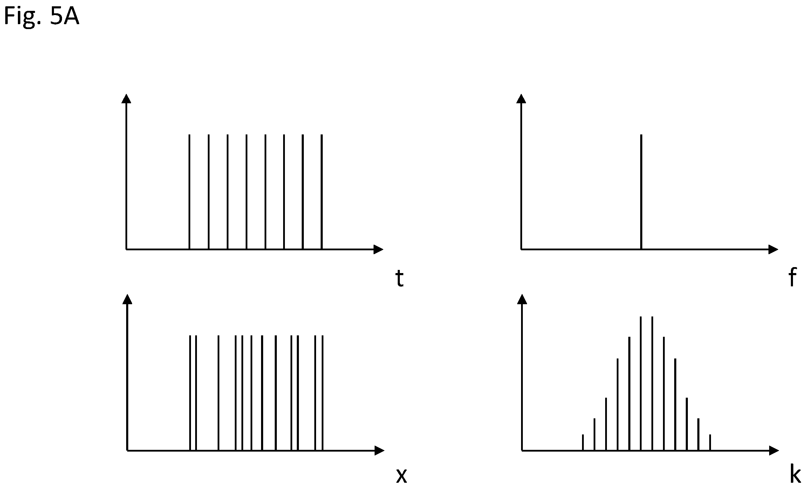

Figur 5A zeigt ein erfindungsgemäßes Verfahren zum Bearbeiten eines Materials 6 mittels Laserpulse 300 eines gepulsten Lasers 3, wobei zur Bearbeitung des Materials 6 die Laserpulse 300 in das Material 6 eingebracht werden. Vorliegend gibt der Laser 3 Laserpulse 300 mit einer bestimmten Frequenz ab, die beispielsweise dem Systemtakt eines Systemtaktgenerators 1 entsprechen. Die ausgelösten Laserpulse fallen hierbei auf eine Positionsoffsetvorrichtung 7 von der sie abgelenkt werden. Die Positionsoffsetvorrichtung 7 kann beispielsweise über den Statistikgenerator 2 angesteuert werden. Dementsprechend werden die Laserpulse 300 mit der statistischen Verteilung abgelenkt, beispielsweise senkrecht zur Vorschubrichtung abgelenkt. Durch die Ablenkung der Laserpulse 300 werden daher die Laserpulse räumlich statistisch um die Vorschubtrajektorie verteilt.

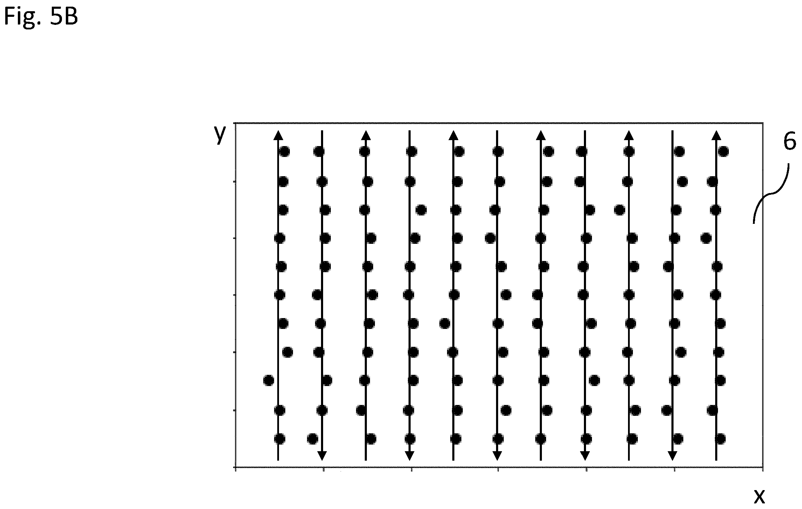

In Figur 5B ist ein solches Verfahren gezeigt. Der Laserstrahl 30 wird periodisch in einer mäandernden Art und Weise über ein Material 6 gefahren, während senkrecht zur Trajektorie die Laserpulse durch die Positionsoffsetvorrichtung 7 abgelenkt werden. Aufgrund der gleichmäßigen Pulsabgabe liegen die Laserpulse in der y-Richtung in einem regelmäßigen Muster vor, weisen aber senkrecht zur Mäanderstruktur eine räumliche statistische Verteilung auf.

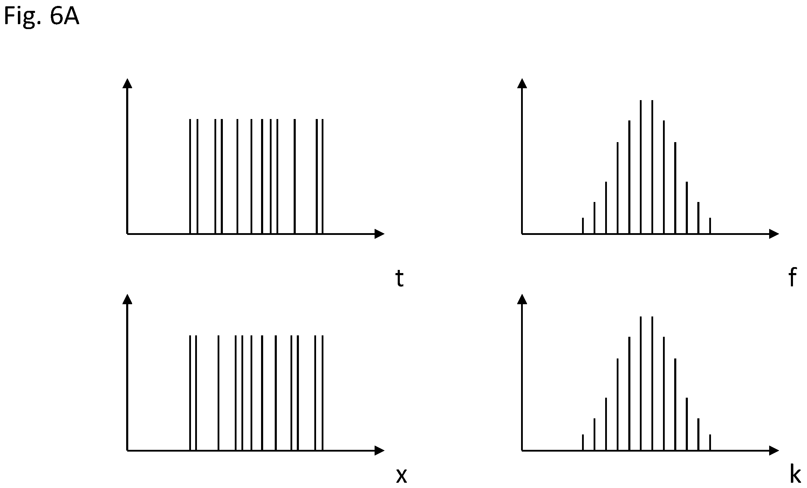

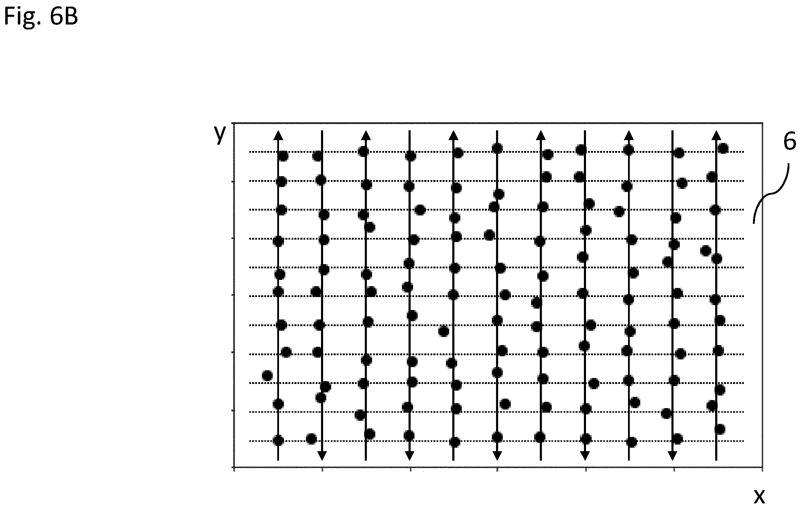

Zusätzlich zu der räumlichen statistischen Verteilung durch die Positionsoffsetvorrichtung 7 kann aber auch der Laser 3 Laserpulse 300 mit einer zeitlichen statistischen Verteilung abgeben, beispielsweise indem eine Pulse-On-Demand Funktionalität des Lasers 3 durch das Signal des Statistikgenerators 2 ausgelöst wird. Dies ist in Figur 6A gezeigt. Die zeitliche statistische Variation der Laserpulsabgabe macht sich bei einem bestehenden Vorschub dadurch bemerkbar, dass die Laserpulse 300 auch entlang der Vorschubrichtung verteilt werden, wie in Figur 6B gezeigt. Hierbei weisen sowohl die Laserpulse sowohl in x- als auch in y-Richtung eine Gaußverteilung auf. Insbesondere sind die Laserpulse 300 auch in Vorschubrichtung gegeneinander versetzt (bei konstanter Vorschubgeschwindigkeit).

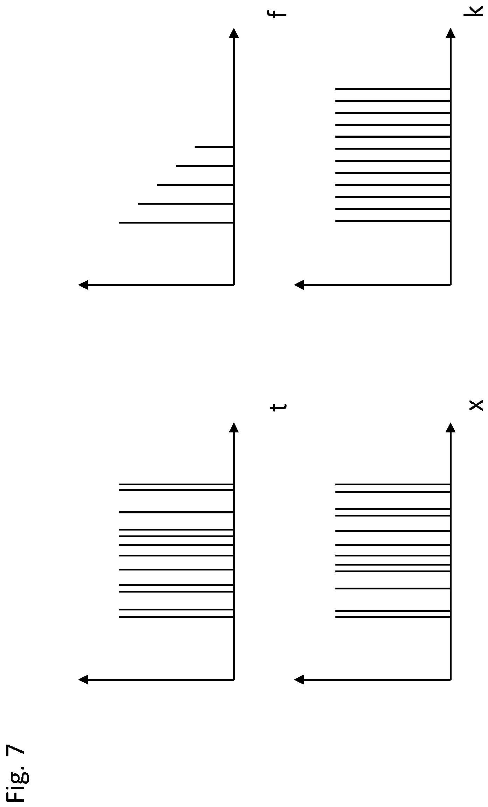

Wie in Figur 7 gezeigt, ist es auch möglich, dass die zeitliche statistische Verteilung und die räumliche statistische Verteilung unterschiedliche Verteilungen sind, beispielsweise eine Dreiecksverteilung und eine Gleichverteilung sind.

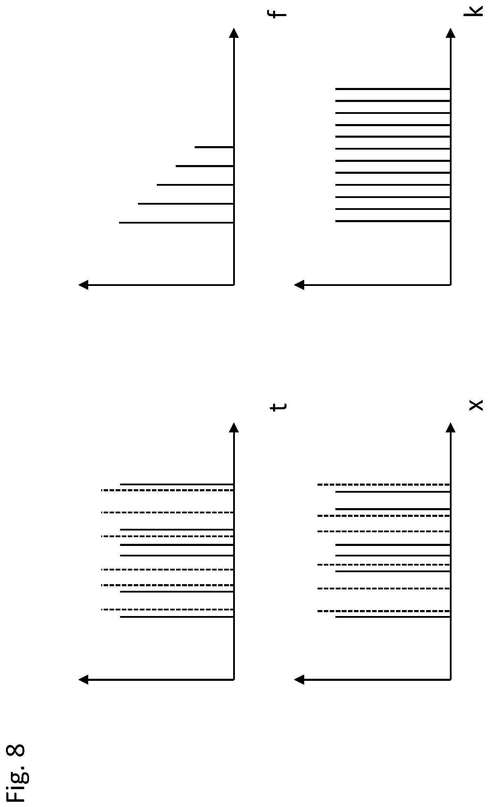

In Figur 8 ist zudem gezeigt, dass die Pulse des Systemtaktsignals (gestrichelte Linien) in unregelmäßigen Abständen ausgelöst werden können, beispielsweise, weil die Vorschubvorrichtung 4 einen solches Systemtaktsignal erst ausgibt, nachdem eine gewisse Strecke verfahren wurde. Insbesondere kann bei ungleichförmigen Geschwindigkeiten eine solche unregelmäßige Pulsabgabe im Zeitraum entstehen. In dem der Statistikgenerator 2 das Signal der Vorschubvorrichtung 4 empfängt, kann eine zusätzliche zeitliche statistische Verteilung aufgeprägt werden, so dass die Laserpulse in einem unregelmäßigen Abstand in das Material 6 eingebracht werden.

### Bezugszeichenliste

- 1: Systemtaktgenerator
- 2: Statistikgenerator
- 3: Laser
- 30: Laserstrahl
- 32: Fokuszone
- 300: Laserpuls
- 34: Seedlaser
- 36: Verstärker
- 4: Vorschubvorrichtung
- 40: Achsvorrichtung
- 42: Scannervorrichtung
- 400: Vorschubtrajektorie
- 5: Bearbeitungsoptik
- 6: Material
- 7: Positionsoffsetvorrichtung

## Patentansprüche

1. Verfahren zum Bearbeiten eines Materials (6) mittels Laserpulsen (300) eines gepulsten Lasers (3), wobei zur Bearbeitung des Materials (6) die Laserpulse (300) in das Material (6) eingebracht werden, wobei die
Laserpulse (300) räumlich statistisch um einen räumlichen Sollwert verteilt in das Material (6) eingebracht werden,
**dadurch gekennzeichnet, dass**
die statistische Verteilung der Laserpulse einstellbar ist und in Abhängigkeit von der aktuellen Vorschubgeschwindigkeit angepasst wird.

2. Verfahren nach Anspruch 1, **dadurch gekennzeichnet, dass** die Laserpulse (300) in mindestens einer räumlichen Dimension statistisch verteilt sind.

3. Verfahren nach einem der Ansprüche 1 oder 2, **dadurch gekennzeichnet, dass** der Laserstrahl (30) und das Material (6) relativ zueinander mit einem Vorschub verschoben werden, wobei die Vorschubgeschwindigkeit insbesondere größer als 50mm/s ist.

4. Verfahren nach einem der vorherigen Ansprüche, **dadurch gekennzeichnet, dass** die Laserpulse mit einer zeitlichen statistischen Verteilung um einen zeitlichen Sollwert während des Vorschubs abgegeben werden.

5. Verfahren nach einem der vorherigen Ansprüche, **dadurch gekennzeichnet, dass** die statistische Verteilung der Laserpulse (300) einer Gaußverteilung oder einer Gleichverteilung oder einer Dreiecksverteilung oder einer Sägezahnverteilung entspricht.

6. Verfahren nach einem der vorherigen Ansprüche, **dadurch gekennzeichnet, dass** die statistische Verteilung einen oberen und/oder einen unteren Cut-Off-Wert aufweist.

7. Verfahren nach einem der vorherigen Ansprüche, **dadurch gekennzeichnet, dass** unmittelbar nacheinander abgegebene Laserpulse nicht überlappen.

8. Verfahren nach einem der vorherigen Ansprüche, **dadurch gekennzeichnet, dass** die die zeitliche statistische Verteilung der Laserpulse in Abhängigkeit von der aktuellen Vorschubgeschwindigkeit angepasst wird.

9. Vorrichtung zum Bearbeiten eines Materials (6), umfassend einen Laser, eine Vorschubvorrichtung (4), die dazu eingerichtet ist, den Laserstrahl (300) und das Material (6) relativ zueinander zu bewegen, eine Bearbeitungsoptik (5), die dazu eingerichtet ist, den Laserstrahl (30) in eine Fokuszone (32) zu überführen und in das Material (6) einzubringen, wodurch das Material (6) bearbeitet wird,
**dadurch gekennzeichnet, dass** die Vorrichtung folgende Merkmale aufweist:
einen Systemtaktgenerator (1), der dazu eingerichtet ist, ein Systemtaktsignal bereit zu stellen,
einen Statistikgenerator (2), der dazu eingerichtet ist, den Systemtakt zu empfangen, dem Systemtakt eine zeitliche statistische Verteilung aufzuprägen und ein Statistiktaktsignal bereitzustellen,
den Laser (3), der dazu eingerichtet ist, das Statistiktaktsignal oder das Systemtaktsignal zu empfangen und beim Empfang des Taktsignals einen Laserpuls (300) abzugeben, wobei die statistische Verteilung der Laserpulse einstellbar ist und in Abhängigkeit von der aktuellen Vorschubgeschwindigkeit angepasst wird.

10. Vorrichtung nach Anspruch 9, **gekennzeichnet durch** eine Positionsoffsetvorrichtung (7), die dazu eingerichtet ist, das Statistiktaktsignal zu empfangen und den Laserpulsen (300) eine räumliche statistische Verteilung um einen räumlichen Sollwert aufzuprägen und

11. Vorrichtung nach einem der Ansprüche 9 oder 10, **dadurch gekennzeichnet, dass** die Vorschubvorrichtung (4) das Systemtaktsignal empfängt oder das Statistiktaktsignal empfängt oder das Systemtaktsignal bereitstellt.

12. Vorrichtung nach einem der Ansprüche 9 bis 11, **dadurch gekennzeichnet, dass** die Positionsoffsetvorrichtung (7) ein elektrooptischer und/oder akustooptischer Deflektor ist und/oder auf Coherent Beam Combining basiert, der das Statistiktaktsignal empfängt und den Laserpuls (300) entsprechend ablenkt, wobei bevorzugt die räumliche statistische Verteilung mit einer Taktung von über 100kHz, bevorzugt 1MHz erfolgt.

13. Vorrichtung nach einem der Ansprüche 9 bis 12, **dadurch gekennzeichnet, dass**
- die Wellenlänge der Laserpulse (300) zwischen 200nm und 3000nm beträgt, und/oder
- die Repetitionsrate des Lasers zwischen 10kHz und 100MHz liegt, insbesondere zwischen 10kHz und 100MHz liegt und/oder
- der Laserpuls (300) zusammengesetzt ist aus einer Vielzahl von Burstpulsen, insbesondere aus 2 bis 100 Burstpulsen, und/oder
- die Fluenz größer als 0,05J/cm^2 ist, insbesondere zwischen 0,1J/cm^2 und 50J/cm^2 beträgt, und/oder
- die Laserpulsdauer zwischen 10fs und 100ns beträgt, insbesondere zwischen 100fs und 100ps beträgt.

14. Vorrichtung nach einem der Ansprüche 9 bis 13, **dadurch gekennzeichnet, dass** der Laserstrahl (30) eine Gauß'sche Strahlform aufweist oder eine nichtbeugende Strahlform aufweist, insbesondere eine Flattop-Strahlform und/oder eine Supergaußform und/oder eine Tophat-Strahlform aufweist.

## Claims

1. A method for processing a material (6) by means of laser pulses (300) of a pulsed laser (3), wherein the laser pulses (300) are introduced into the material (6) in order to process the material (6), wherein the laser pulses (300) are introduced into the material (6) in a distributed manner spatially statistically around a spatial target value,
**characterized in that**
the statistical distribution of the laser pulses can be adjusted and is adapted according to the current feed rate.

2. The method according to claim 1, **characterized in that** the laser pulses (300) are statistically distributed in at least one spatial dimension.

3. The method according to either one of claims 1 or 2, **characterized in that** the laser beam (30) and the material (6) are displaced relative to one another with a feed, wherein the feed rate is in particular greater than 50 mm/s.

4. The method according to any one of the preceding claims, **characterized in that** the laser pulses are emitted with a temporal statistical distribution around a temporal target value during the feed.

5. The method according to any one of the preceding claims, **characterized in that** the statistical distribution of the laser pulses (300) corresponds to a Gaussian distribution, or a uniform distribution, or a triangular distribution, or a sawtooth distribution.

6. The method according to any one of the preceding claims, **characterized in that** the statistical distribution has an upper and/or a lower cut-off value.

7. The method according to any one of the preceding claims, **characterized in that** laser pulses emitted in immediate succession do not overlap.

8. The method according to any one of the preceding claims, **characterized in that** the temporal statistical distribution of the laser pulses is adapted according to the current feed rate.

9. A device for processing a material (6), comprising a laser,
**characterized in that** the device has the following features:
a system clock generator (1) designed to provide a system clock signal,
a statistics generator (2) designed to receive the system clock, to impose a temporal statistical distribution on the system clock, and to provide a statistics clock signal,
the laser (3), which is designed to receive the statistics clock signal or the system clock signal, and to emit a laser pulse (300) when the clock signal is received, wherein the statistical distribution of the laser pulses can be adjusted and is adapted according to the current feed rate,
a feed device (4) designed to move the laser beam (300) and the material (6) relative to one another,
a processing optical unit (5) designed to transfer the laser beam (30) to a focus zone (32) and to introduce it into the material (6), thereby processing the material (6).

10. The device according to claim 9, **characterized by** a position offset device (7) designed to receive the statistics clock signal and to impose a spatial statistical distribution around a spatial target value on the laser pulses (300), and

11. The device according to any one of claims 9 or 10, **characterized in that** the feed device (4) receives the system clock signal or receives the statistics clock signal or provides the system clock signal.

12. The device according to any one of claims 9 to 11, **characterized in that** the position offset device (7) is an electro-optical and/or acousto-optical deflector and/or is based on coherent beam combining, which receives the statistics clock signal and deflects the laser pulse (300) accordingly, wherein preferably the spatial statistical distribution takes place with a clock rate of over 100 kHz, preferably 1 MHz.

13. The device as claimed in any one of claims 9 to 12, **characterized in that**
- the wavelength of the laser pulses (300) is between 200 nm and 3000 nm, and/or
- the repetition rate of the laser is between 10 kHz and 100 MHz, in particular between 10 kHz and 100 MHz and/or
- the laser pulse (300) is composed of a plurality of burst pulses, in particular of 2 to 100 burst pulses, and/or
- the fluence is greater than 0.05 J/cm^2, in particular between 0.1 J/cm^2 and 50 J/cm^2, and/or
- the laser pulse duration is between 10 fs and 100 ns, in particular between 100 fs and 100 ps.

14. The device according to any one of claims 9 to 13, **characterized in that** the laser beam (30) has a Gaussian beam shape or has a non-diffracting beam shape, in particular has a flat-top beam shape and/or a super-Gaussian beam shape and/or a top-hat beam shape.

## Revendications

1. Procédé de traitement d'un matériau (6) au moyen d'impulsions laser (300) d'un laser pulsé (3), dans lequel les impulsions laser (300) sont introduites dans le matériau (6) pour le traitement du matériau (6), dans lequel les impulsions laser (300) sont introduites dans le matériau (6) de manière distribuée statistiquement et spatialement autour d'une valeur cible spatiale,
**caractérisé en ce que**
la distribution statistique des impulsions laser est ajustable et est adaptée en fonction de la vitesse d'avance réelle.

2. Procédé selon la revendication 1, **caractérisé en ce que** les impulsions laser (300) sont statistiquement distribuées dans au moins une dimension spatiale.

3. Procédé selon l'une des revendications 1 ou 2, **caractérisé en ce que** le faisceau laser (30) et le matériau (6) sont avancés l'un par rapport à l'autre selon une avance, dans lequel la vitesse d'avance est notamment supérieure à 50 mm/s.

4. Procédé selon l'une des revendications précédentes, **caractérisé en ce que** les impulsions laser sont émises avec une distribution statistique temporelle autour d'un point cible temporel pendant l'avance.

5. Procédé selon l'une des revendications précédentes, **caractérisé en ce que** la distribution statistique des impulsions laser (300) correspond à une distribution gaussienne ou une distribution uniforme ou une distribution triangulaire ou une distribution en dents de scie.

6. Procédé selon l'une des revendications précédentes, **caractérisé en ce que** la distribution statistique présente une valeur de coupure supérieure et/ou inférieure.

7. Procédé selon l'une des revendications précédentes, **caractérisé en ce que** des impulsions laser émises immédiatement l'une après l'autre ne se chevauchent pas.

8. Procédé selon l'une des revendications précédentes, **caractérisé en ce que** la distribution statistique temporelle des impulsions laser est adaptée en fonction de la vitesse d'avance réelle.

9. Dispositif de traitement d'un matériau (6), comprenant un laser,
**caractérisé en ce que** le dispositif présente les caractéristiques suivantes :
un générateur d'horloge système (1) qui est destiné à fournir un signal d'horloge système,
un générateur de statistiques (2) qui est destiné à recevoir l'horloge système, à imposer une distribution statistique temporelle à l'horloge système et à fournir un signal d'horloge statistique,
le laser (3) qui est destiné à recevoir le signal d'horloge statistique ou le signal d'horloge système et à émettre une impulsion laser (300) lors de la réception du signal d'horloge, dans lequel la distribution statistique des impulsions laser est ajustable et est adaptée en fonction de la vitesse d'avance réelle.
un dispositif d'avance (4) qui est destiné à déplacer le faisceau laser (300) et le matériau (6) l'un par rapport à l'autre,
une optique de traitement (5) qui est destinée à transférer le faisceau laser (30) dans une zone de focalisation (32) et l'introduire dans le matériau (6), moyennant quoi le matériau (6) est traité,

10. Dispositif selon la revendication 9, **caractérisé par** un dispositif de décalage de position (7) qui est destiné à recevoir le signal d'horloge statistique et à imprimer une distribution statistique spatiale autour d'une valeur cible spatiale sur les impulsions laser (300).

11. Dispositif selon l'une des revendications 9 ou 10, **caractérisé en ce que** le dispositif d'avance (4) reçoit le signal d'horloge système ou reçoit le signal d'horloge statistique ou fournit le signal d'horloge système.

12. Dispositif selon l'une des revendications 9 à 11, **caractérisé en ce que** le dispositif de décalage de position (7) est un déflecteur électro-optique et/ou acousto-optique et/ou est basé sur la combinaison cohérente de faisceaux, qui reçoit le signal d'horloge statistique et dévie l'impulsion laser (300) en conséquence, dans lequel la distribution statistique spatiale est de préférence effectuée à une fréquence d'horloge supérieure à 100 kHz, de préférence 1 MHz.

13. Dispositif selon l'une des revendications 9 à 12, **caractérisé en ce que**
- la longueur d'onde des impulsions laser (300) est comprise entre 200 nm et 3000 nm, et/ou
- le taux de répétition du laser est compris entre 10 kHz et 100 MHz, en particulier entre 10 kHz et 100 MHz et/ou
- l'impulsion laser (300) est composée d'une pluralité d'impulsions en rafale, en particulier de 2 à 100 impulsions en rafale, et/ou
- la fluence est supérieure à 0,05 J/cm², en particulier entre 0,1 J/cm² et 50 J/cm², et/ou
- la durée d'impulsion laser est comprise entre 10 fs et 100 ns, en particulier entre 100 fs et 100 ps.

14. Dispositif selon l'une des revendications 9 à 13, **caractérisé en ce que** le faisceau laser (30) présente une forme de faisceau gaussien ou présente une forme de faisceau non diffractif, en particulier présente une forme de faisceau à sommet plat et/ou une forme de faisceau super-gaussien et/ou une forme de faisceau en chapeau haut-de-forme.
